# EUROPEAN PATENT SPECIFICATION

(11) **EP 1 785 178 B1**
(45) Date of publication and mention of the grant of the patent: **06.07.2011**
(21) Application number: 05257010.8
(22) Date of filing: 14.11.2005
(51) Int. Cl.: B01D 29/11, B01D 29/23, B01D 29/54, B01D 29/68

(54) **Method for cleaning a filtering system and a filtering system having cleaning capabilities.**
Methode zur Filterreinigung und Filtrationssystem mit Reinigungseinrichtungen
Procede de nettoyage d'un systeme de filtration et un systeme de filtration ayant un dispositif de nettoyage

(43) Date of publication of application: 16.05.2007
(73) Proprietor: Odis Irrigation Equipment Limited, 49130 Petah-Tikva (IL)
(72) Inventor: Shmuel, Gil, Kefar-Sava 44534 (IL); Belogorodsky, Joshua, Tel Aviv 69865 (IL)
(74) Representative: Harrison Goddard Foote

(56) References cited:
- WO-A-2006/008729
- DE-A1- 4 007 893
- GB-A- 2 265 840
- US-A- 5 779 901
- US-B1- 6 337 013

## Description

### FIELD OF THE INVENTION

The present invention relates to methods for cleaning a filtering system and to filtering systems having cleaning capabilities.

### BACKGROUND OF THE INVENTION

Filtering systems are used in various fields such as but not limited to filtration of fluids, irrigation water, recycling of sewage and industrial waste water, recycling of cooling towers water, filtration and purification of drinking water etc.

Typical filtering systems include a coarse filter and a fine filter. One inevitable problem of many existing filtering systems is the accumulation of sediments on the filters and especially of the fine filter, blocking it and lowering the flow rate until totally preventing it. Thus, plain filtration systems have to be treated occasionally by cleaning the used blocked filtering element or by replacing it with a clean one, which means interrupting and stopping the filtration process from time to time.

Self-cleaning filtering systems are known in the art. Self-cleaning filtering systems usually clean a cylindrically shaped fine filter by scanning it by a backwash body. The following patents and patent applications illustrate some prior art self-cleaning filters: U.S. patent 6283305 of Madea et al., titled "Filter apparatus with backwashing mechanism"; U.S. patent 6419823 of DeLonge et al. titled "Apparatus and method for sanitizing and cleaning a filter system"; U.S. patent 4295963 of Drori titled "Backwashable fluid filter"; and U.S. patent 6267879 of Gil. During a backwash operation a pressure difference is introduced between a backwash outlet and the filter that is being cleaned. DE 40 07 893 discloses a movable water screen cleaning device, comprising a telescoping nozzle, arranged to suck clean a curved, but non-cylindrical, water screen.

A typical backwash body includes multiple nozzles that are fixed to the backwash body and are relatively distant from the cylindrically shaped filter, so that (a) dirt (that can include relatively large particles) that is located between the nozzle and the inner part of the filter, (b) filter deformations, or (c) filter inaccuracies will not slow down the movement of the backwash body, or even stop the movement of the backwash body. In addition, this distance also prevents excess friction between the nozzle and the filter.

This distance reduces the efficiency of the backwash operation.

There is a need to provide efficient and improved methods for cleaning a filtering system and filtering systems having self-cleaning capabilities.

### SUMMARY OF THE INVENTION

According to the present invention a filtering system is provided as set out in claim 1.

Conveniently, the at least one nozzle is adapted to contact, during the backwash operation, at least one of the following elements: (i) an inner face of the substantially cylindrical filter, or (ii) dirt that is positioned between the inner face of the substantially cylindrical filter and the nozzle.

According to an embodiment of the invention the at least one nozzle can loosely contact either one of elements (i) or (ii).

According to an embodiment of the invention the at least one nozzle is adapted to be positioned in proximity to at least one of elements (i) and (ii).

The nozzle is shaped such that fluid within the filter housing forces the nozzle to move towards the substantially cylindrical filter during the backwash operation.

Conveniently, an outer edge of the nozzle faces an inner face of the substantially cylindrical filter. The area of the outer edge is smaller than an area of a inner edge of the nozzle.

Conveniently, the at least one nozzle is shaped such that the fluid within the filter housing forces the nozzle to contact, or loosely contact, during the backwash operation, at least one of elements (i) and (ii).

According to an embodiment of the invention the backwash body further includes a spring that forces a corresponding nozzle to move towards the substantially cylindrical filter. Conveniently the spring can force the corresponding nozzle to contact, to loosely contact at least one of elements (i) and (ii).

According to an embodiment of the invention the filtering system includes at least one nozzle-limiting element for limiting a movement of at least one corresponding nozzle.

According to an embodiment of the invention the backwash body includes at least one hollow guide and at least one nozzle is adapted to move along a corresponding hollow guide.

According to the invention, a method for cleaning a filtering system is provided as set out in claim 11.

Conveniently, the method includes moving the at least one nozzle until it contacts or loosely contacts at least one of elements (i) or (ii).

Conveniently, the method includes moving the at least one nozzle until it is positioned at a small distance from at least one of elements (i) or (ii).

Conveniently, the method comprises maintaining the at least one nozzle in proximity to at least one of elements (i) and (ii) by the fluid the flows through the filtering system, during the backwash operation.

Conveniently, the fluid that flows during the backwash operation can cause the at least one nozzle to contact (or maintain in contact with) at least one of elements (i) and (ii). Said contact can be a loose contact.

Conveniently, the method includes moving the at least one nozzle by at least one corresponding spring.

### BRIEF DESCRIPTION OF THE FIGURE

The present invention will be understood and appreciated more fully from the following detailed description taken in conjunction with the drawings in which:

FIG. 1 is a cross sectional view of a filtering system, according to an embodiment of the invention;

FIG. 2 is a cross sectional view of a filtering system, according to another embodiment of the invention;

FIG. 3 is a cross sectional view of a backwash body, according to an embodiment of the invention;

FIG. 4 is a cross sectional view of a guide and a nozzle, according to an embodiment of the invention;

FIG. 6 is a cross sectional view of a guide and a nozzle, according to another embodiment of the invention;

FIG. 7 is a cross sectional view of a guide and a nozzle, according to a further embodiment of the invention; and

FIG. 8 is a flow chart illustrating a method for cleaning a filtering system, according to an embodiment of the invention.

### DETAILED DESCRIPTION OF THE FIGURE

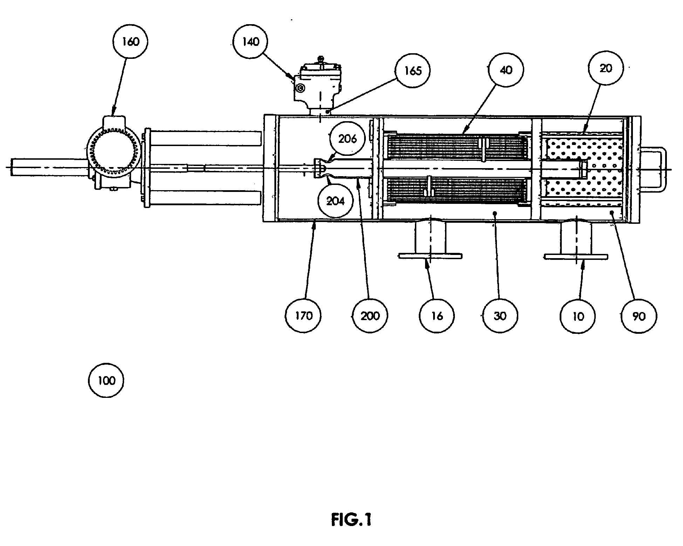

FIG. 1 is a cross sectional view of filtering system 100, according to an embodiment of the invention. The cross section is made along an imaginary longitudinal axis of the filtering system.

Filtering system 100 can include one or more filters. It usually includes a coarse filter as well as a fine filter. For simplicity of explanation it is assumed that filtering system 100 includes a cylindrical coarse filter 20 and a substantially cylindrical filter 40 that is also refereed to as fine filter 40.

It is noted that the coarse filter 20 can be subjected to a backwash operation, but this is not necessarily so. For convenience of explanation the following description refers to backwash operation of fine filter 40.

Filtering system 100 includes an elongated tube shaped housing 170 having fluid inlet 10 for a connection with a fluid supply duct (not illustrated), through which the fluid enters a preliminary filtering chamber 90. The preliminary filtering chamber 90 is opened to a final filtering chamber 30 through the coarse filter 20 that is adapted to removing rough particles from the fluid.

The pre-filtered fluid which passes the coarse filter 20 flows through the fine filter 40 to the filtered fluid chamber 30 and to the fluid outlet 160 adapted for a connection with a filtered fluid duct (not illustrated). Conveniently, the preliminary filtering chamber 90 and the filtered fluid chamber 30 are two compartments within one tube shaped envelope.

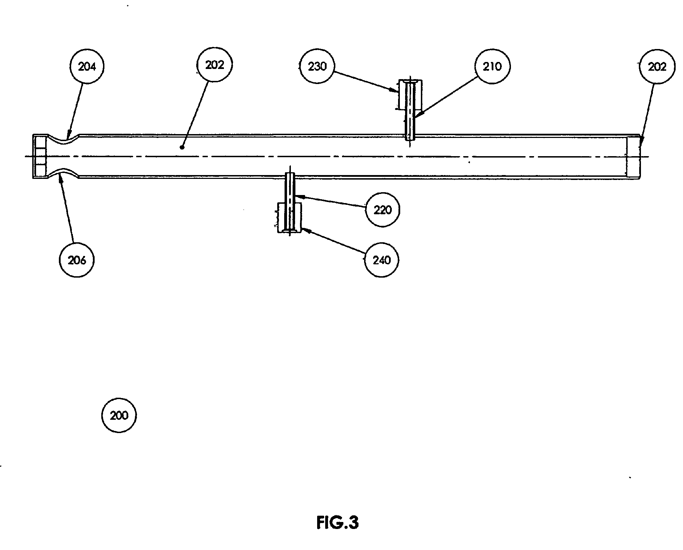

A backwash body 200 is movably mounted within the filter housing 170. The backwash body 200 includes an elongated hollow portion 202 (of FIG. 3), and at least one hollow guide, such as guides 210 and 220 (of FIG. 3), that extend from the hollow portion 202 towards the fine filter 40. The backwash body 200 is in contact with at least one nozzle, such as nozzles 230 and 240 (of FIG. 3) that can move, conveniently along guides 210 and 220, towards the inner face of the fine filter 40 during a backwash operation. The elongated hollow portion 202 includes one or more outlets, such as outlets 204 and 206 (of FIG. 3) that are located within the filtered fluid chamber 30.

While the backwash body 200 and especially the elongated hollow portion 202 performs a helical movement within the filter housing 170, the nozzle 230 further move towards the inner face of fine filter 40 such as to increase the efficiency of the backwash operation.

Thus, while the backwash body 200 moves along an imaginary longitudinal axis of the filtering system 100 and also rotates (performs a tangential movement) about that imaginary longitudinal axis, the nozzles further perform a radial movement towards the inner face of fine filter 40.

The backwash operation is usually activated according to a differential pressure sensor gauge that is adapted for identifying a predetermined differential pressure between different portions of the filtering system, indicating that a certain amount of dirt blocks the filter, thus a cleaning operation is required. The backwash operation can be initiated, additionally or alternatively, in a periodic manner, in a random manner, in a quasi-random manner, automatically, manually, in response to a request to perform such as backwash operation, and the like.

The helical movement can be induced by a motor, by hydraulic mechanisms, automatically or manually, and the like.

FIG. 1 illustrates filtering system 100 that includes an electrical motor 160 that induces the helical movement. Such motors as well as driving mechanisms are known in the art and some are illustrated by the patents that were mentioned above. In general, the driving mechanism translates the rotation of the motor to a helical movement of the backwash body 200. The direction (clockwise or counterclockwise) of the rotation of the backwash body is dictated by the rotation direction of the motor 160. The motor 160 can be activated in various manners. The direction of the rotation can be switched according to the location of the backwash body 200, in response to the number of rotations and/or in response to rotation periods.

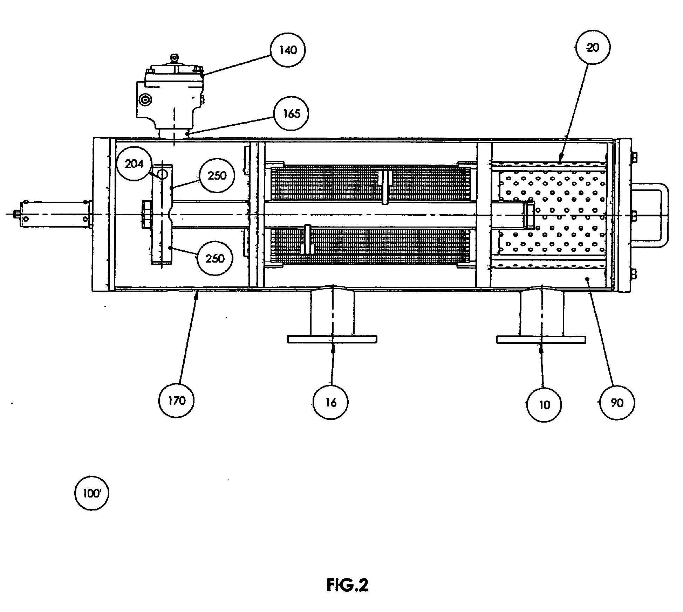

FIG. 2 is a cross sectional view of filtering system 100', according to an embodiment of the invention.

Filtering system 100' does not include a motor 160 but includes a backwash body 200 that includes two relatively large hollow guides 250 that are shaped so that the propagation of fluid within the filtered fluid chamber 30 (towards the backwash valve 140) rotates the fins. This rotation is then translated to a helical movement. These guides can also be referred to as jets or as an hydraulic motor.

The nozzles 230 and 240 are hollow such as to allow fluid, dirt and particles to propagate towards the backwash body 200.

The guides 210 and 220 and accordingly the nozzles 230 and 240 are usually spaced apart from each other. It is further noted that the amount of guides can differ then two. Conveniently, the different guides are positioned such that during the helical movement of the backwash body 200 substantially the entire fine filter 40 is backwashed.

During the backwash operation fluid, dirt and particles are sucked into the nozzles 230 and 240, pass through the backwash guides 210 and 220, the backwash body 200, the filtered fluid chamber 30, the backwash outlet 165 and the opened backwash valve 140.

Conveniently, the suction operation is generated automatically by the pressure-difference between the pressure of the fluid within the filter housing 170 and the pressure of the free atmosphere to which the backwash valve 140 is opened during the backwash operation.

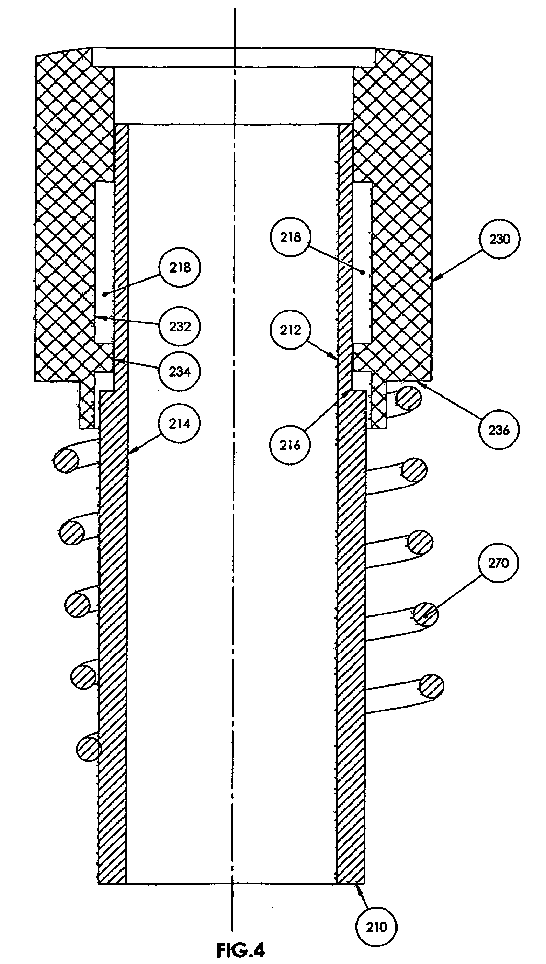

FIG. 4 is a cross sectional view of guide 210 and nozzle 230, according to an embodiment of the invention.

Guide 210 has a cylindrical shape. FIG. 4 illustrates a guide 210 that includes an upper portion 212 and a lower portion 214. The upper portion 212 is thinner than the lower portion 214 such as to define a step 216 that limits the radial movement of nozzle 230 towards the elongated hollow portion 202.

The nozzle 230 can move along an imaginary radial axis that is substantially perpendicular to the imaginary longitudinal axis of the filtering system 100.

Conveniently, nozzle 230 moves along guide 210, or at least along upper portion 212, while extending towards the inner part of fine filter 40.

Nozzles 230 can have a cylindrical shape. It is conveniently shaped such as to define an annular space 218 between a portion 232 of the inner face of nozzle 230 and the outer face of guide 210. Another portion 234 of the inner face of nozzle 230 contacts the outer face of guide 210, thus allowing nozzle 230 to move along guide 210. The annular space 218 reduces the friction between nozzle 230 and guide 210. It is noted that other shapes (of the nozzle, guides and space) can be used whilst still being in accordance with other embodiments of the present invention.

A spring 270 placed on the lower portion 214 of guide 210. The spring 270 contacts a inner edge 236 of nozzle 230 and forces the nozzle 230 to move towards the inner face of fine filter 40. The lower end 236 of nozzle can include an annular recess or annular step that are shaped such as to contact one end of the spring 270. The lower end 236 of nozzle 230 can also include a step of a recess that is shaped according to step 216 of guide 210.

If fine filter 40 was totally clean and was ideally cylindrical then the distance between the fine filter and the elongated hollow portion 202 is maintained fixed. In reality the distance can change due to filter deformations, filter manufacturing inaccuracies, and filter (or backwash body) misalignment. In addition, dirt can be stuck between the nozzle and the fine filter 40. In over to provide efficient cleaning in these conditions the distance between the nozzle end and an imaginary longitudinal axis of the filtering system can be adjusted in various manners. FIG. 4 illustrates a spring 270 that cause the nozzle 230 to track a pattern defined by the inner face of the fine filter 40, and optionally by dirt that is positioned between the nozzle and the inner face of the fine filter 40.

According to an embodiment of the invention the nozzle can be shaped such that the fluid within the filter housing forces the nozzle to substantially contact the inner face of fine filter 40 during the backwash operation.

Conveniently, the centrifugal force and/or gravity (when the nozzle is below hollow elongated portion 202) force the nozzle to move towards the inner face of fine filter 40. Once the nozzle is proximate to the inner face of the fine filter 40 the fluid forces the nozzle to maintain in proximity to the inner face of the fine filter 40 (or near dirt positioned between the nozzle 230 and the inner face of the fine filter 40).

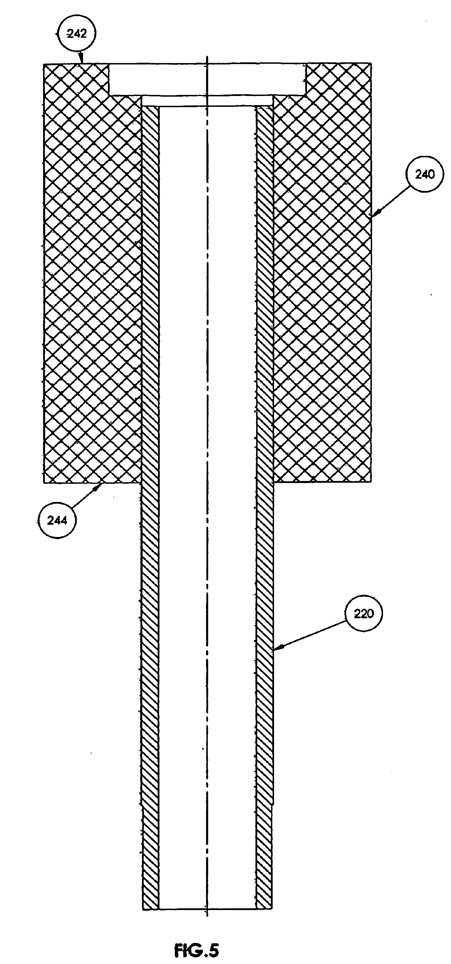

FIG. 5 is a cross sectional view of a guide 220 and a nozzle 240, according to another embodiment of the invention.

Nozzle 240 includes an outer edge 242 and an inner edge 244. The outer edge 242 faces an inner face of fine filter 40. The area of the outer edge 242 is smaller than the area of the inner edge 244.

During the backwash operation fluid flows through the final filtering chamber 30 toward the space defined within nozzle 240. Due to this flow the outer edge 242 of nozzle 240 is pushed away from the fine filter 40 while the inner edge is pushed towards the fine filter. Because the area of the inner edge 244 is larger than the area of the outer edge 242 of nozzle 240 the overall effect of the fluid flow is to push nozzle 240 towards the inner face of fine filter 40.

Conveniently, an upper portion of nozzle that is defined by the outer edge 242 is thinner that a lower portion of the nozzle as defined by the inner edge 244 of nozzle 240. This can be achieved in various manners such as but not limited by defining an annular recess 246 within outer edge 244.

It is noted that the outer edge 244 can be shaped in various manners. The shape of outer edge 244 may correspond to the shape of fine filter 40. It can be curved, include multiple angled surfaces and the like.

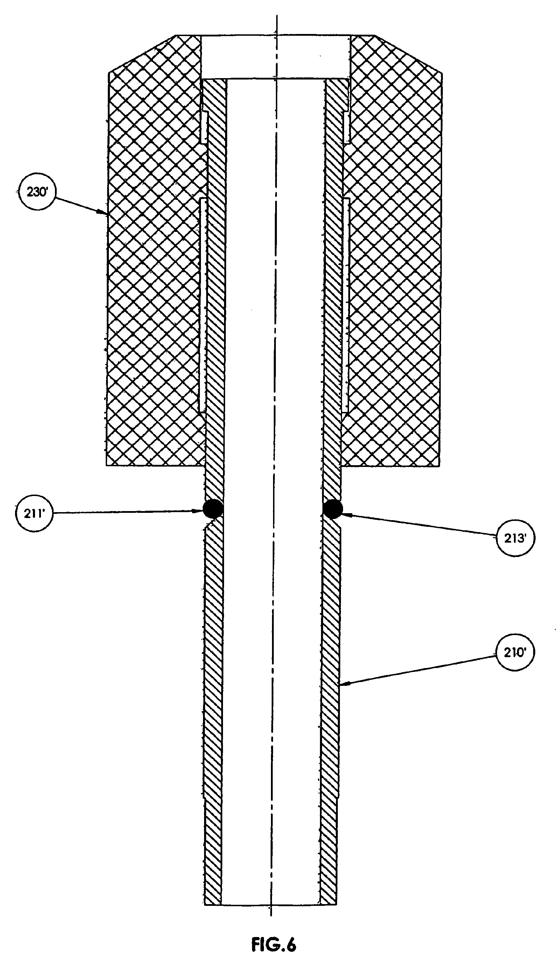

FIG. 6 is a cross sectional view of a guide 210' and a nozzle 230', according to a further embodiment of the invention.

Guide 210' includes an annular recess 211' and a ring 213' that is partially located within the annular recess 211'. The ring 213' limits the movement of nozzle 230' towards the elongated hollow portion 202.

Nozzle 230' is shaped such that during the backwash operation the fluid that flows towards the backwash outlet forces it to maintain in proximity to the inner face of the fine filter 40 (or near dirt positioned between the nozzle 230' and the inner face of the fine filter 40).

The inner face of nozzle 230' is also shaped such as to define two annular spaces between the inner face of nozzle 230' and the outer face of guide 210'.

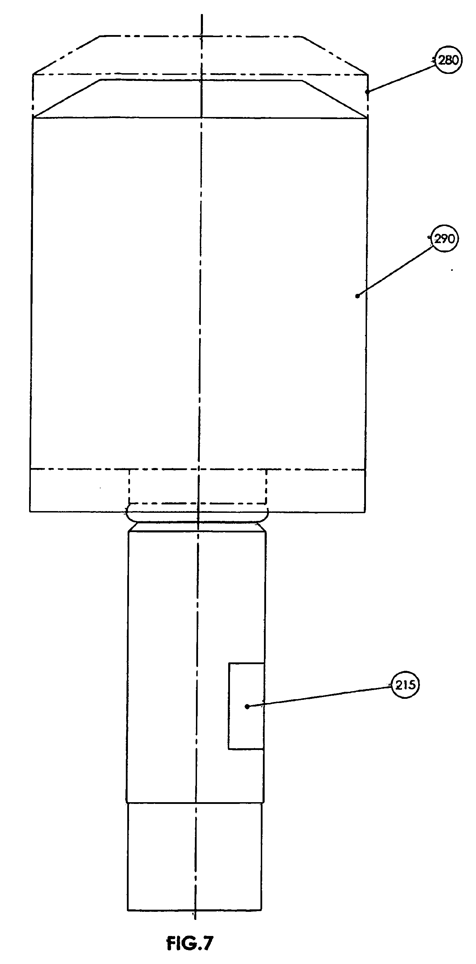

FIG. 7 illustrates two possible positions of a nozzle, according to an embodiment of the invention.

Nozzle 230 can move between two positions - an upper position 280 (closer to the inner face of fine filter 40) and a lower position 290 (closer to the elongated hollow portion 202). The dashed curves illustrated the upper position 280.

The guide 210 is illustrated as having a recess 215 for easing the fastening of the guide 210.

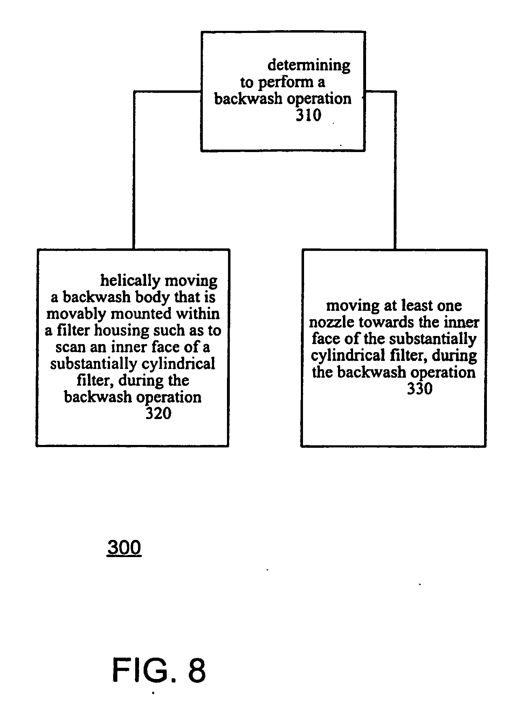

FIG. 8 is a flow chart illustrating method 300 for cleaning a filtering system, according to an embodiment of the invention.

Method 300 starts by stage 310 of determining to perform a backwash operation.

Stage 310 is followed by stages 320 and 330. Stage 320 includes helically moving a backwash body that is movably mounted within a filter housing such as to scan an inner face of a substantially cylindrical filter, during the backwash operation.

Stage 330 includes moving at least one nozzle towards the inner face of the substantially cylindrical filter, during the backwash operation.

Stages 320 and 330 can be continued until the backwash operation terminates. Conveniently once the backwash operation terminates a filtering process initiates.

Conveniently, stage 330 includes moving the at least one nozzle until it contacts at least one of the following: (i) an inner face of the substantially cylindrical filter, and (ii) dirt that is positioned between the inner face of the substantially cylindrical filter and the nozzle.

Conveniently, stage 330 includes moving the at least one nozzle until it loosely contacts an inner face of the substantially cylindrical filter or dirt that is positioned between the inner face of the substantially cylindrical filter and the nozzle.

Conveniently, stage 330 includes moving the at least one nozzle until it is positioned at a small distance from at least one of the following: (i) an inner face of the substantially cylindrical filter, and (ii) dirt that is positioned between the inner face of the substantially cylindrical filter and the nozzle.

Conveniently, stage 330 includes moving the at least one nozzle by the fluid within the filter housing.

According to an embodiment of the invention stage 330 can include maintaining, by the fluid that flows during the backwash operation, the at least one nozzle in proximity to the inner face of the substantially cylindrical filter.

Conveniently the fluid can cause the at least one nozzle to contact (and even loosely contact) the inner face of the substantially cylindrical filter or dirt that is positioned between the inner face of the substantially cylindrical filter and the nozzle.

Conveniently, stage 330 involves moving the at least one nozzle by a spring.

## Claims

1. A filtering system (100) comprising:
a filter housing (170) comprising a fluid inlet (10) and a fluid outlet (16);
a filter located within the filter housing;
a backwash body (200) movably mounted within the filter housing (170) for performing a helical movement while backwashing the filter(40); and
at least one nozzle (230, 230', 240) in connection with the backwash body,
**characterised in that**
the filter is a substantially cylindrical filter (40);
the at least one nozzle is adapted to move towards the substantially cylindrical filter so that during a backwash operation, when the nozzle performs a helical movement, and is proximate to, the inner surface of the cylindrical filter (40), the nozzle is maintained in proximity to an inner face of the substantially cylindrical filter, or in proximity to dirt positioned between the nozzle and an inner face of the substantially cylindrical filter;
wherein the at least one nozzle moves between two positions - an upper position that is closer to the inner face of the cylindrical filter and a lower position that is closer to an elongated hollow portion of the backwash body;
wherein the at least one nozzle is shaped such that fluid within the filter housing (170) forces the at least one nozzle to move towards the substantially cylindrical filter (40) during the backwash operation; and
wherein the system comprises a differential pressure sensor gauge that activates the backwash operation.

2. The filtering system (100) according to claim 1 wherein the at least one nozzle (230, 230', 240) is adapted to contact, during the backwash operation, at least one of the following:
(i) an inner face of the substantially cylindrical filter (40), and
(ii) dirt that is positioned between the inner face of the substantially cylindrical filter (40) and the nozzle (230, 230', 240).

3. The filtering system (100) according to claim 1 wherein the at least one nozzle (230, 230', 240) is adapted to loosely contact, during the backwash operation, at least one of the following:
(i) an inner face of the substantially cylindrical filter(40), and
(ii) dirt that is positioned between the inner face of the substantially cylindrical filter (40) and the nozzle (230, 230', 240).

4. The filtering system (100) according to claim 1 wherein the at least one nozzle (230, 230', 240) is adapted to be positioned in proximity to at least one of the following:
(i) an inner face of the substantially cylindrical filter(40), and
(ii) dirt that is positioned between the inner face of the substantially cylindrical filter (40) and the nozzle(230, 230', 240).

5. The filtering system (100) according to any preceding claim wherein an outer edge (242) of the nozzle (230, 230', 240) faces an inner face of the substantially cylindrical filter (40) and wherein an area of the outer edge (242) is smaller than an area of a inner edge (244) of the nozzle (230, 230', 240).

6. The filtering system (100) according to any preceding claim wherein the at least one nozzle (230, 230', 240) is shaped such that the fluid within the filter housing (170) forces the nozzle (230, 230', 240) to contact, during the backwash operation, at least one of the following:
(i) an inner face of the substantially cylindrical filter(40), and
(ii) dirt that is positioned between the inner face of the substantially cylindrical filter (40) and the nozzle (230, 230', 240).

7. The filtering system (100) according to any preceding claim wherein the backwash body (200) further comprises a spring (270) that forces a corresponding nozzle (230, 230', 240) to move towards the substantially cylindrical filter (40).

8. The filtering system (100) according to any preceding claim wherein a backwash body (200) further comprises a spring (270) that forces a corresponding nozzle (230, 230', 240) to contact, during the backwash operation, at least one of the following:
(i) an inner face of the substantially cylindrical filter(40), and
(ii) dirt that is positioned between the inner face of the substantially cylindrical filter (40) and the nozzle(230, 230', 240).

9. The filtering system (100) according to any preceding claim further comprising at least one nozzle limiting element for limiting a movement of at least one corresponding nozzle (230, 230', 240).

10. The filtering system (100) according to any preceding claim wherein the backwash body (200) comprises at least one hollow guide and wherein at least one nozzle (230, 230', 240) is adapted to move along a corresponding hollow guide.

11. A method (300) for cleaning a filtering system (100), the method comprising:
determining (310) to perform a backwash operation;
**characterised in that** the method further comprises:
helically moving (320) a backwash body (200) that is movably mounted within a filter housing (170) such as to scan an inner face of a substantially cylindrical filter (40), during the backwash operation; and
moving (330), by force of fluid within the filter housing (170), at least one nozzle (230, 230', 240) towards the inner face of the substantially cylindrical filter (40), during the backwash operation;
wherein the at least one nozzle moves between two positions - an upper position that is closer to the inner face of the cylindrical filter and a lower position that is closer to an elongated hollow portion of the backwash body.

12. The method according to claim 11 wherein the moving comprises moving the at least one nozzle(230, 230', 240) until it contacts at least one of the following:
(i) an inner face of the substantially cylindrical filter(40), and
(ii) dirt that is positioned between the inner face of the substantially cylindrical filter (40) and the nozzle (230, 230', 240).

13. The method according to claim 11 wherein the moving comprises moving the at least one radial backwash element until it loosely contacts at least one of the following:
(i) an inner face of the substantially cylindrical filter(40), and
(ii) dirt that is positioned between the inner face of the substantially cylindrical filter (40) and the nozzle (230, 230', 240).

14. The method according to claim 11 wherein the moving comprises moving the at least one nozzle (230, 230', 240) until it is positioned at a small distance from at least one of the following:
(i) an inner face of the substantially cylindrical filter(40), and
(ii) dirt that is positioned between the inner face of the substantially cylindrical filter (40) and the nozzle (230, 230', 240).

15. The method according to claim 11 wherein the moving comprises moving the at least one nozzle (230, 230', 240) until it contacts at least one of the following:
(i) an inner face of the substantially cylindrical filter (40), and
(ii) dirt that is positioned between the inner face of the substantially cylindrical filter (40) and the nozzle (230, 230', 240).

16. The method according to any one of claims 11 to 15 wherein the moving comprising moving the at least one nozzle (230, 230', 240) by at least one corresponding spring.

17. The method according to claim 16 wherein the moving comprises moving the at least one nozzle (230, 230', 240) until it contacts at least one of the following:
(i) an inner face of the substantially cylindrical filter (40), and
(ii) dirt that is positioned between the inner face of the substantially cylindrical filter (40) and the nozzle (230, 230', 240).

18. The method according to any one of claims 11 to 17 comprising maintaining, during the backwash operation, the at least one nozzle (230, 230', 240) in proximity to at least one of the following:
(i) an inner face of the substantially cylindrical filter (40), and
(ii) dirt that is positioned between the inner face of the substantially cylindrical filter (40) and the nozzle (230, 230', 240).

19. The method according to any one of claims 11 to 18 comprising maintaining, by fluid that flows during the backwash operation, the at least one nozzle (230, 230', 240) in proximity to at least one of the following:
(i) an inner face of the substantially cylindrical filter (40), and
(ii) dirt that is positioned between the inner face of the substantially cylindrical filter (40) and the nozzle (230, 230', 240).

20. The method according to any one of claims 11 to 18 comprising maintaining, by fluid that flows during the backwash operation, the at least one nozzle (230, 230', 240) in contact with at least one of the following:
(i) an inner face of the substantially cylindrical filter (40), and
(ii) dirt that is positioned between the inner face of the substantially cylindrical filter (40) and the nozzle(230, 230', 240).

## Patentansprüche

1. Ein Filtersystem (100) mit:
einem Filtergehäuse (170), das einen Fluideinlass (10) und einen Fluidauslass (16) aufweist;
einem Filter, der innerhalb des Filtergehäuses angeordnet ist;
einem Rückspülkörper (200), der in dem Filtergehäuse (170) beweglich angeordnet ist, um eine spiralartige Bewegung durchzuführen, während der Filter (40) rückgespült wird; und
zumindest einer Düse (230, 230', 240), die in Verbindung mit dem Rückspülkörper steht,
**dadurch gekennzeichnet, dass**
der Filter ein im Wesentlichen zylindrischer Filter (40) ist;
die zumindest eine Düse dafür ausgestaltet ist, sich in Richtung auf den im Wesentlichen zylindrischen Filter zuzubewegen, so dass während des Vorgangs des Rückspülens, wenn die Düse eine spiralartige Bewegung durchführt und sich in der näheren der inneren Oberfläche des zylindrischen Filters (40) befindet, die Düse in der Nähe zu einer inneren Oberfläche des im Wesentlichen zylindrischen Filters oder in der Nähe von Dreck gehalten wird, der sich zwischen der Düse und einer inneren Oberfläche des im Wesentlichen zylindrischen Filters befindet;
wobei sich die zumindest eine Düse zwischen zwei Positionen bewegt - einer oberen Position, die sich näher an der inneren Oberfläche des zylindrischen Filters befindet, und einer unteren Position, die sich näher an einem länglichen hohlen Abschnitt des Rückspülkörpers befindet;
wobei die zumindest eine Düse derart geformt ist, dass innerhalb des Filtergehäuses (170) befindliches Fluid die zumindest eine Düse zwingt, sich während des Vorgangs des Rückspülens in Richtung auf den im Wesentlichen zylindrischen Filter zuzubewegen; und
wobei das System ein Sensormessgerät für einen differentiellen Druck aufweist, das den Vorgang des Rückspülens aktiviert.

2. Das Filtersystem (100) nach Anspruch 1, wobei die zumindest eine Düse (230, 230', 240) dafür ausgebildet ist, während des Vorgangs des Rückspülens, mit zumindest einem der folgenden Elemente in Kontakt zu treten:
(i) einer inneren Oberfläche des im Wesentlichen zylindrischen Filters (40), und
(ii) Dreck, der sich zwischen der inneren Oberfläche des im Wesentlichen zylindrischen Filters (40) und der Düse (230, 230', 240) befindet.

3. Das Filtersystem (100) nach Anspruch 1, wobei die zumindest eine Düse (230, 230', 240) dafür ausgebildet ist, während des Vorgangs des Rückspülens, mit zumindest einem der folgenden Elemente locker in Kontakt zu treten:
(i) einer inneren Oberfläche des im Wesentlichen zylindrischen Filters (40), und
(ii) Dreck, der sich zwischen der inneren Oberfläche des im Wesentlichen zylindrischen Filters (40) und der Düse (230, 230', 240) befindet.

4. Das Filtersystem (100) nach Anspruch 1, wobei die zumindest eine Düse (230, 230', 240) dafür ausgebildet ist, in der Nähe von zumindest einem der folgenden Elemente positioniert zu werden:
(i) einer inneren Oberfläche des im Wesentlichen zylindrischen Filters (40), und
(ii) Dreck, der sich zwischen der inneren Oberfläche des im Wesentlichen zylindrischen Filters (40) und der Düse (230, 230', 240) befindet.

5. Das Filtersystem (100) nach einem der vorhergehenden Ansprüche, wobei eine äußere Kante (242) der Düse (230, 230', 240) einer inneren Oberfläche des im Wesentlichen zylindrischen Filters (40) zugewandt ist und wobei ein Bereich der äußeren Kante (242) kleiner ist als ein Bereich einer inneren Kante (244) der Düse (230, 230', 240).

6. Das Filtersystem (100) nach einem der vorhergehenden Ansprüche, wobei die zumindest eine Düse (230, 230', 240) derart geformt ist, dass das innerhalb des Filtergehäuses (170) befindliche Fluid die Düse (230, 230', 240) dazu zwingt, während des Vorgangs des Rückspülens, in Kontakt mit zumindest einem der folgenden Elemente zu treten:
(i) einer inneren Oberfläche des im Wesentlichen zylindrischen Filters (40), und
(ii) Dreck, der sich zwischen der inneren Oberfläche des im Wesentlichen zylindrischen Filters (40) und der Düse (230, 230', 240) befindet.

7. Das Filtersystem (100) nach einem der vorhergehenden Ansprüche, wobei der Rückspülkörper (200) des Weiteren eine Feder (270) aufweist, die eine zugehörige Düse (230, 230', 240) dazu zwingt, sich in Richtung auf den im Wesentlichen zylindrischen Filter (40) zuzubewegen.

8. Das Filtersystem (100) nach einem der vorhergehenden Ansprüche, wobei ein Rückspülkörper (200) des Weiteren eine Feder (270) aufweist, die eine zugehörige Düse (230, 230', 240) dazu zwingt, während des Vorgangs des Rückspülens, mit zumindest einem der folgenden Elemente in Kontakt zu treten:
(i) einer inneren Oberfläche des im Wesentlichen zylindrischen Filters (40), und
(ii) Dreck, der sich zwischen der inneren Oberfläche des im Wesentlichen zylindrischen Filters (40) und der Düse (230, 230', 240) befindet.

9. Das Filtersystem (100) nach einem der vorhergehenden Ansprüche, des weiteren mit zumindest einem Düsenbegrenzungselement, um eine Bewegung der zumindest einen zugehörigen Düse (230, 230', 240) zu begrenzen.

10. Das Filtersystem (100) nach einem der vorhergehenden Ansprüche, wobei der Rückspülkörper (200) zumindest eine hohle Führung aufweist und wobei die zumindest eine Düse (230, 230', 240) dafür ausgebildet ist, sich entlang einer entsprechenden hohlen Führung zu bewegen.

11. Ein Verfahren (300) zum Reinigen eines Filtersystems (100), das Verfahren mit den folgenden Schritten:
Feststellen (310), dass ein Vorgang des Rückspülens durchgeführt werden soll;
**dadurch gekennzeichnet, dass** das Verfahren ferner die folgenden Schritte aufweist:
spiralartiges Bewegen (320) eines Rückspülkörpers (200), der beweglich innerhalb eines Filtergehäuses (170) angeordnet ist, um eine innere Oberfläche eines im Wesentlichen zylindrischen Filters (40) während des Vorgangs des Rückspülens abzufahren; und
Bewegen, durch die Kraft eines Fluids innerhalb des Filtergehäuses (71), von zumindest einer Düse (230, 230', 240) in Richtung auf die innere Oberfläche des im Wesentlichen zylindrischen Filters (40) zu, und zwar während des Vorgangs des Rückspülens;
wobei sich die zumindest eine Düse zwischen zwei Positionen bewegt - einer oberen Position, die sich näher an der inneren Oberfläche des zylindrischen Filters befindet, und einer unteren Position, die sich näher an einem länglichen hohlen Abschnitt des Rückspülkörpers befindet.

12. Das Verfahren nach Anspruch 11, wobei der Schritt des Bewegens ein Bewegen der zumindest einen Düse (230, 230', 240) aufweist, bis sie mit zumindest einem der folgenden Elemente in Kontakt tritt:
(i) einer inneren Oberfläche des im Wesentlichen zylindrischen Filters (40), und
(ii) Dreck, der sich zwischen der inneren Oberfläche des im Wesentlichen zylindrischen Filters (40) und der Düse (230, 230', 240) befindet.

13. Das Verfahren nach Anspruch 11, wobei der Schritt des Bewegens ein Bewegen des zumindest einen radialen Rückspülelements aufweist, bis es mit zumindest einem der folgenden Elemente locker in Kontakt tritt:
(i) einer inneren Oberfläche des im Wesentlichen zylindrischen Filters (40), und
(ii) Dreck, der sich zwischen der inneren Oberfläche des im Wesentlichen zylindrischen Filters (40) und der Düse (230, 230', 240) befindet.

14. Das Verfahren nach Anspruch 11, wobei der Schritt des Bewegens ein Bewegen der zumindest einen Düse (230, 230', 240) aufweist, bis sie sich in einem kleinen Abstand zu zumindest einem der folgenden Elemente befindet:
(i) einer inneren Oberfläche des im Wesentlichen zylindrischen Filters (40), und
(ii) Dreck, der sich zwischen der inneren Oberfläche des im Wesentlichen zylindrischen Filters (40) und der Düse (230, 230', 240) befindet.

15. Das Verfahren nach Anspruch 11, wobei der Schritt des Bewegens ein Bewegen der zumindest einen Düse (230, 230', 240) aufweist, bis sie mit zumindest einem der folgenden Elemente in Kontakt tritt:
(i) einer inneren Oberfläche des im Wesentlichen zylindrischen Filters (40), und
(ii) Dreck, der sich zwischen der inneren Oberfläche des im Wesentlichen zylindrischen Filters (40) und der Düse (230, 230', 240) befindet.

16. Das Verfahren nach einem der Ansprüche 11 bis 15, wobei der Schritt des Bewegens ein Bewegen der zumindest einen Düse (230, 230', 240) mittels zumindest einer zugehörigen Feder aufweist.

17. Das Verfahren nach Anspruch 16, wobei der Schritt des Bewegens ein Bewegen der zumindest einen Düse (230, 230', 240) aufweist, bis sie mit zumindest einem der folgenden Elemente in Kontakt tritt:
(i) einer inneren Oberfläche des im Wesentlichen zylindrischen Filters (40), und
(ii) Dreck, der sich zwischen der inneren Oberfläche des im Wesentlichen zylindrischen Filters (40) und der Düse (230, 230', 240) befindet.

18. Das Verfahren nach einem der Ansprüche 11 bis 17, mit dem Schritt eines Haltens, während des Vorgangs des Rückspülens, der zumindest einen Düse (230, 230', 240) in der Nähe von zumindest einem der folgenden Elemente:
(i) einer inneren Oberfläche des im Wesentlichen zylindrischen Filters (40), und
(ii) Dreck, der sich zwischen der inneren Oberfläche des im Wesentlichen zylindrischen Filters (40) und der Düse (230, 230', 240) befindet.

19. Das Verfahren nach einem der Ansprüche 11 bis 18, mit dem Schritt eines Haltens, mittels eines Fluids, das während des Vorgangs des Rückspülens fließt, der zumindest einen Düse (230, 230', 240) in der Nähe von zumindest einem der folgenden Elemente:
(i) einer inneren Oberfläche des im Wesentlichen zylindrischen Filters (40), und
(ii) Dreck, der sich zwischen der inneren Oberfläche des im Wesentlichen zylindrischen Filters (40) und der Düse (230, 230', 240) befindet.

20. Das Verfahren nach einem der Ansprüche 11 bis 19, mit dem Schritt eines Haltens, mittels eines Fluids, das während des Vorgangs des Rückspülens fließt, der zumindest einen Düse (230, 230', 240) in Kontakt mit zumindest einem der folgenden Elemente:
(i) einer inneren Oberfläche des im Wesentlichen zylindrischen Filters (40), und
(ii) Dreck, der sich zwischen der inneren Oberfläche des im Wesentlichen zylindrischen Filters (40) und der Düse (230, 230', 240) befindet.

## Revendications

1. Système de filtration (100) comprenant :
- un boîtier de filtre (170) comprenant une entrée de fluide (10) et une sortie de fluide (16) ;
- un filtre disposé à l'intérieur du boîtier de filtre ;
- un corps de lavage à contre-courant (200) monté de manière mobile à l'intérieur du boîtier de filtre (170) pour effectuer un mouvement hélicoïdal tout en lavant à contre-courant le filtre (40) ; et
- au moins une buse (230, 230', 240) en liaison avec le corps de lavage à contre-courant,
**caractérisé par le fait que**
- le filtre est un filtre sensiblement cylindrique (40) :
- la au moins une buse est apte à se déplacer vers le filtre sensiblement cylindrique, de telle sorte que, lors d'une opération de lavage à contre-courant, lorsque la buse effectue un mouvement hélicoïdal et se trouve à proximité de la surface interne du filtre cylindrique (40), la buse est maintenue à proximité d'une face interne du filtre sensiblement cylindrique ou à proximité de la saleté positionnée entre la buse et une face interne du filtre sensiblement cylindrique ;
- la au moins une buse se déplaçant entre deux positions - une position supérieure qui est plus proche de la face interne du filtre cylindrique et une position inférieure qui est plus proche d'une partie creuse allongée du corps de lavage à contre-courant ;
- la au moins une buse étant façonnée de telle sorte qu'un fluide à l'intérieur du boîtier de filtre (170) force la au moins une buse à se déplacer vers le filtre sensiblement cylindrique (40) lors de l'opération de lavage à contre-courant ; et
- le système comprenant une jauge de capteur de pression différentielle qui active l'opération de lavage à contre-courant.

2. Système de filtration (100) selon la revendication 1, dans lequel la au moins une buse (230, 230', 240) est apte à venir en contact, lors de l'opération de lavage à contre-courant, avec au moins l'une parmi ce qui suit :
(i) une face interne du filtre sensiblement cylindrique (40), et
(ii) de la saleté qui est positionnée entre la face interne du filtre sensiblement cylindrique (40) et la buse (230, 230', 240).

3. Système de filtration (100) selon la revendication 1, dans lequel la au moins une buse (230, 230', 240) est apte à venir en contact de manière lâche, lors de l'opération de lavage à contre-courant, avec au moins l'une parmi ce qui suit :
(i) une face interne du filtre sensiblement cylindrique (40), et
(ii) de la saleté qui est positionnée entre la face interne du filtre sensiblement cylindrique (40) et la buse (230, 230', 240).

4. Système de filtration (100) selon la revendication 1, dans lequel la au moins une buse (230, 230', 240) est apte à être positionnée à proximité d'au moins l'une parmi ce qui suit :
(i) une face interne du filtre sensiblement cylindrique (40), et
(ii) de la saleté qui est positionnée entre la face interne du filtre sensiblement cylindrique (40) et la buse (230, 230', 240).

5. Système de filtration (100) selon l'une quelconque des revendications précédentes, dans lequel un bord externe (242) de la buse (230, 230', 240) est dirigé vers une face interne du filtre sensiblement cylindrique (40) et une surface du bord externe (242) étant plus petite qu'une surface d'un bord interne (244) de la buse (230, 230', 240).

6. Système de filtration (100) selon l'une quelconque des revendications précédentes, dans lequel la au moins une buse (230, 230', 240) est façonnée de telle sorte que le fluide à l'intérieur du boîtier de filtre (170) force la buse (230, 230', 240) à venir en contact, lors de l'opération de lavage à contre-courant, avec au moins l'une parmi ce qui suit :
(i) une face interne du filtre sensiblement cylindrique (40), et
(ii) de la saleté qui est positionnée entre la face interne du filtre sensiblement cylindrique (40) et la buse (230, 230', 240).

7. Système de filtration (100) selon l'une quelconque des revendications précédentes, dans lequel le corps de lavage à contre-courant (200) comprend en outre un ressort (270) qui force une buse correspondante (230, 230', 240) à se déplacer vers le filtre sensiblement cylindrique (40).

8. Système de filtration (100) selon l'une quelconque des revendications précédentes, dans lequel un corps de lavage à contre-courant (200) comprend en outre un ressort (270) qui force une buse correspondante (230, 230', 240) à venir en contact, lors de l'opération de lavage à contre-courant, avec au moins l'une parmi ce qui suit :
(i) une face interne du filtre sensiblement cylindrique (40), et
(ii) de la saleté qui est positionnée entre la face interne du filtre sensiblement cylindrique (40) et la buse (230, 230', 240).

9. Système de filtration (100) selon l'une quelconque des revendications précédentes, comprenant en outre au moins un élément de limitation de buse pour limiter un déplacement d'au moins une buse correspondante (230, 230', 240).

10. Système de filtration (100) selon l'une quelconque des revendications précédentes, dans lequel le corps de lavage à contre-courant (200) comprend au moins un guide creux et au moins une buse (230, 230', 240) étant apte à se déplacer le long d'un guide creux correspondant.

11. Procédé (300) pour le nettoyage d'un système de filtration (100), le procédé comprenant l'étape consistant à :
- déterminer (310) la réalisation d'une opération de lavage à contre-courant ;
**caractérisé par le fait que** le procédé comprend en outre les étapes consistant à :
- déplacer de manière hélicoïdale (320) un corps de lavage à contre-courant (200) qui est monté de manière mobile à l'intérieur d'un boîtier de filtre (170) de façon à balayer une face interne d'un filtre sensiblement cylindrique (40), lors de l'opération de lavage à contre-courant ; et
- déplacer (330), par la force du fluide à l'intérieur du boîtier de filtre (170), au moins une buse (230, 230', 240) vers la face interne du filtre sensiblement cylindrique (40), lors de l'opération de lavage à contre-courant ;
- la au moins une buse se déplaçant entre deux positions - une position supérieure qui est plus proche de la face interne du filtre cylindrique et une position inférieure qui est plus proche d'une partie creuse allongée du corps de lavage à contre-courant.

12. Procédé selon la revendication 11, dans lequel le déplacement comprend le déplacement de la au moins une buse (230, 230', 240) jusqu'à ce qu'elle soit en contact avec au moins l'une parmi ce qui suit :
(i) une face interne du filtre sensiblement cylindrique (40), et
(ii) de la saleté qui est positionnée entre la face interne du filtre sensiblement cylindrique (40) et la buse (230, 230', 240).

13. Procédé selon la revendication 11, dans lequel le déplacement comprend le déplacement du au moins un élément radial de lavage à contre-courant jusqu'à ce qu'il soit en contact de manière lâche avec au moins l'une parmi ce qui suit :
(i) une face interne du filtre sensiblement cylindrique (40), et
(ii) de la saleté qui est positionnée entre la face interne du filtre sensiblement cylindrique (40) et la buse (230, 230', 240).

14. Procédé selon la revendication 11, dans lequel le déplacement comprend le déplacement de la au moins une buse (230, 230', 240) jusqu'à ce qu'elle soit positionnée à une faible distance d'au moins l'une parmi ce qui suit :
(i) une face interne du filtre sensiblement cylindrique (40), et
(ii) de la saleté qui est positionnée entre la face interne du filtre sensiblement cylindrique (40) et la buse (230, 230', 240).

15. Procédé selon la revendication 11, dans lequel le déplacement comprend le déplacement de la au moins une buse (230, 230', 240) jusqu'à ce qu'elle soit en contact avec au moins l'une parmi ce qui suit :
(i) une face interne du filtre sensiblement cylindrique (40), et
(ii) de la saleté qui est positionnée entre la face interne du filtre sensiblement cylindrique (40) et la buse (230, 230', 240).

16. Procédé selon l'une quelconque des revendications 11 à 15, dans lequel le déplacement comprend le déplacement de la au moins une buse (230, 230', 240) par au moins un ressort correspondant.

17. Procédé selon la revendication 16, dans lequel le déplacement comprend le déplacement de la au moins une buse (230, 230', 240) jusqu'à ce qu'elle soit en contact avec au moins l'une parmi ce qui suit :
(i) une face interne du filtre sensiblement cylindrique (40), et
(ii) de la saleté qui est positionnée entre la face interne du filtre sensiblement cylindrique (40) et la buse (230, 230', 240).

18. Procédé selon l'une quelconque des revendications 11 à 17, comprenant le maintien, lors de l'opération de lavage à contre-courant, la au moins une buse (230, 230', 240) à proximité d'au moins l'une parmi ce qui suit :
(i) une face interne du filtre sensiblement cylindrique (40), et
(ii) de la saleté qui est positionnée entre la face interne du filtre sensiblement cylindrique (40) et la buse (230, 230', 240).

19. Procédé selon l'une quelconque des revendications 11 à 18, comprenant le maintien, par un fluide qui s'écoule lors de l'opération de lavage à contre-courant, la au moins une buse (230, 230', 240) à proximité d'au moins l'une parmi ce qui suit :
(i) une face interne du filtre sensiblement cylindrique (40), et
(ii) de la saleté qui est positionnée entre la face interne du filtre sensiblement cylindrique (40) et la buse (230, 230', 240).

20. Procédé selon l'une quelconque des revendications 11 à 18, comprenant le maintien, par un fluide qui s'écoule lors de l'opération de lavage à contre-courant, la au moins une buse (230, 230', 240) en contact avec au moins l'une parmi ce qui suit :
(i) une face interne du filtre sensiblement cylindrique (40), et
(ii) de la saleté qui est positionnée entre la face interne du filtre sensiblement cylindrique (40) et la buse (230, 230', 240).
